# EUROPÄISCHE PATENTANMELDUNG

(11) **EP 4 588 824 A1**
(43) Veröffentlichungstag der Anmeldung: **23.07.2025**
(21) Anmeldenummer: 24152911.4
(22) Anmeldetag: 19.01.2024
(51) Int. Cl.: B65G 1/04

(54) **LAGERANORDNUNG UND VERFAHREN ZUM BETREIBEN EINER LAGERANORDNUNG**

(71) Anmelder: Jungheinrich Aktiengesellschaft, 22047 Hamburg (DE)
(72) Erfinder: Leiking, Lars, 85435 Erding (DE); Seemüller, Stefan, 85716 Unterschleißheim (DE); Schöne, Martin, 84130 Dingolfing (DE)
(74) Vertreter: Keil & Schaafhausen Patentanwälte PartGmbB

(57) **Zusammenfassung**

Die vorliegende Erfindung betrifft eine Lageranordnung mit einem Wareneingang, einem Warenausgang und einer Blocklageranordnung (1), wobei die Blocklageranordnung (1) mehrere Behälterstapelräume (3) und einen in Schwerkraftrichtung unterhalb der Behälterstapelräume (3) angeordneten Beschickungsraum (2) aufweist.

Aufgabe der vorliegenden Erfindung ist es, eine Lageranordnung für eine Kommissionierungsanwendung vorzuschlagen, die eine gute Raumausbeute und eine gute Effizienz aufweist.

Dazu weist die Blocklageranordnung (1) einen oberhalb des Beschickungsraums (2) angeordneten ersten Kommissionierraum (5) auf, der dazu ausgestaltet ist einen Behälterstapel aufzunehmen, wobei der Kommissionierraum (5) eine obere Öffnung zur Entnahme eines Behälters (4) aufweist.

## Beschreibung

Die vorliegende Erfindung betrifft eine Lageranordnung mit einem Wareneingang, einem Warenausgang und einer Blocklageranordnung, wobei die Blocklageranordnung mehrere Behälterstapelräume und einen in Schwerkraftrichtung unterhalb der Behälterstapelräume angeordneten Beschickungsraum aufweist.

Weiterhin betrifft die Erfindung ein Verfahren zum Betreiben einer Lageranordnung, bei dem Waren in einem stapelbaren Behälter in einem Behälterstapelraum einer Blocklageranordnung zwischenlagert werden, wobei die Blocklageranordnung mehrere Behälterstapelräume aufweist und jeder Behälterstapelraum zur Aufnahme eines Stapels von Behältern ausgebildet ist, wobei die Behälterstapelräume von unten durch einen Beschickungsraum mit den Behältern beschickt werden und wobei Behälter mit auszulagernden Waren aus dem Behälterstapelraum entnommen werden.

Ein Blocklageranordnung, auch Blocklager oder Stapellager genannt, ist eine Lageranordnung, bei der Behälter in Form von Behälterstapeln in Behälterstapelräumen gelagert werden. Dazu werden die Behälter ausgehend von einer Ein- und Auslagerstation über einen Beschickungsraum durch ein Beschickungsfahrzeug in die Behälterstapelräume eingeführt und entnommen. Der Beschickungsraum ist in Schwerkraftrichtung entweder oberhalb oder unterhalb der Behälterstapelräume angeordnet. Soll ein bestimmter Behälter ausgelagert werden, müssen die darüber bzw. darunter angeordneten Behälter in andere Behälterstapelräume überführt werden, bis das Beschickungsfahrzeug den gewünschten Behälter transportieren kann. Bei einer Blocklageranordnung, bei der der Beschickungsraum unterhalb der Behälteraufnahmeräume angeordnet ist, werden die Behälter bzw. Behälterstapel in dem Behälterstapelraum durch eine lösbare Halteanordnung gehalten. Die Halteanordnung ist durch das Beschickungsfahrzeug betätigbar, im Sinne von lösbar. Dadurch wird eine hohe Packungsdichte erreicht.

Im Bereich des e-Commerce wird eine große Anzahl unterschiedlicher Handelseinheiten (Artikel) gehandhabt und zu kundenspezifischen Aufträgen kommissioniert. Die Artikel werden palettenweise angeliefert, vereinzelt, zwischengelagert, ausgelagert und kommissioniert. Für die Zwischenlagerung werden die Handelseinheiten chaotisch in verfahrbaren Regalen eingelagert. Die Regale werden entweder durch AMR (autonome mobile Roboter) verfahren. Die Regale weisen eine Höhe von ungefähr 2,5 m auf, sodass die oberen Regelfächer nur mit Hilfe von Trittstufen erreicht werden. Dies ist nicht nur zeitaufwendig, sondern es liegt auch eine erhöhte Unfallgefahr vor. Ein weiterer Nachteil ist, dass nicht das gesamte Raumvolumen ausgenutzt werden kann. So bleibt oberhalb der Regale viel Raumvolumen ungenutzt. Weiterhin muss stets ein ganzes Regal verfahren werden, auch wenn nur ein einziger Artikel entnommen werden muss. Entsprechend hoch ist ein Verkehrsaufkommen innerhalb des Lagersystems.

Eine Alternative sind Routenzüge. Hierbei fährt ein Routenzug zu entsprechenden Regalen, vergleichbar mit einem Supermarkt, wobei ein Lagerist manuell Artikel aus dem Regal entnimmt und auf dem Routenzug ablegt. Zwischen den Regalen muss also auch ein Weg für den Routenzug vorhanden sein, was zu einem großen Platzverbrauch führt. Weiterhin müssen die Regale manuell befüllt werden. Entsprechend benötigt man eine große manuelle Arbeitsleistung.

Blocklageranordnungen werden ebenfalls im Bereich des e-Commerce eingesetzt. Das Beschickungsfahrzeug befördert jedoch nur eine geringe Anzahl von Behältern, beispielsweise 1, 2 oder 4. Entsprechend oft muss das Beschickungsfahrzeug entsprechende Behälter einlagern, umlagern und auslagern. Dies ist zeitaufwendig und hat eine geringe Effizienz.

Daher ist die Aufgabe der vorliegenden Erfindung eine Lageranordnung für eine Kommissionierungsanwendung vorzuschlagen, die eine gute Raumausbeute und eine gute Effizienz aufweist.

Weiterhin soll ein Verfahren zum Betreiben einer solchen Lageranordnung vorgeschlagen werden, das eine gute Effizienz und ein geringes Maß an manueller Arbeitsleistung erfordert.

Diese Aufgaben werden durch den Gegenstand der Ansprüche 1 und 9 gelöst.

Dazu weist die Blocklageranordnung einen oberhalb des Beschickungsraums angeordneten ersten Kommissionierraum auf, der dazu ausgestaltet ist einen Behälterstapel aufzunehmen, wobei der erste Kommissionierraum eine in Schwerkraftrichtung obere Öffnung zur Entnahme eines Behälters aufweist.

Der Kommissionierraum wird von unten durch den Beschickungsraum mit Behältern beschickt, sodass ein Behälterstapel gebildet wird. Der Behälterstapel wird durch eine Halteanordnung oberhalb des Beschickungsraumes gehalten. Gleiches gilt für die Behälterstapelräume. Die Halteanordnung ist lösbar, sodass Behälter aus dem Kommissionierraum bzw. dem Behälterstapelräumen nach unten hin entnommen werden können.

Der Kommissionierraum wird entsprechend einer vom Warenausgang vorgegebenen Sequenz mit Behältern und den darin angeordneten Handelseinheiten bestückt. Entsprechend dieser Sequenz kann der im Kommissionierraum angeordnete oberste Behälter nach oben hin entnommen werden. Dadurch kann auf den Inhalt des entnommenen Behälters zugegriffen werden und die Kommissionierung einer vom Warenausgang vorgegebenen Sequenz durchgeführt werden. Der entnommene Behälter kann beispielsweise zwischengelagert werden und zu einem späteren Zeitpunkt der Blocklageranordnung durch eine Ein- und Auslagerstation zugeführt werden.

Beispielsweise kann der Kommissionierraum einen Warenausgang bedienen, bzw. von einem Wareneingang bedient werden. Dazu mündet der Kommissionierraum direkt in dem Wareneingang und/oder Warenausgang oder der Kommissionierraum wirkt mit einer entsprechende Fördertechnik zusammen. Im Fall der Bedienung eines Warenausgangs aus dem Kommissionierraum heraus können Behälter durch die Fördertechnik abgeführt werden. Wird der Kommissionierraum hingegen von einem Wareneingang bedient, so führt die Fördertechnik Behälter dem Kommissionierraum zu. Alternativ kann der Kommissionierraum in einem ersten Zeitraum von einem Wareneingang bedient werden, und in einem zweiten Zeitraum kann der Warenausgang von dem gleichen Kommissionierraum bedient werden. Dadurch kann auf zusätzliche Ein- und -Auslagerstationen zur Ein- und Auslagerung von Behältern in das Bocklager verzichtet werden, was den Platzbedarf reduziert.

Vorzugsweise ist oberhalb der Behälterstapelräume eine Arbeitsplattform angeordnet, wobei sich der erste Kommissionierraum durch die Arbeitsplattform erstreckt. Unterhalb der Arbeitsplattform sind Behälterstapelräume angeordnet. Die Arbeitsplattform kann als Decke oder Zwischenboden eines Gebäudes ausgeführt werden. Der Kommissionierraum erstreckt sich durch die Arbeitsplattform, sodass die Arbeitsplattform eine Aussparung für den Kommissionierraum aufweist. Durch diese Aussparung ragt ein im Kommissionierraum angeordnete Behälterstapel. Weiterhin kann ein Lagerist von der Arbeitsplattform aus auf einen obersten Behälter des Kommissionierraumes zugreifen und die entsprechenden Artikel entnehmen bzw. den Behälter von dem Behälterstapel entnehmen und zwischenlagern oder auf ein Förderband oder dergleichen überführen. Entsprechend kann die erfindungsgemäße Lageranordnung an eine Hallenhöhe angepasst werden, wobei auf eine minimale Höhe oberhalb der Arbeitsplattform geachtet werden muss, damit dort ein Lagerist arbeiten und sich bewegen kann. Die Tätigkeiten des Lageristen können alternativ auch durch einen Roboter durchgeführt werden. Dadurch wird der Lagerraum bis zur Decke gut ausgenutzt.

Vorzugsweise ist die Öffnung zumindest teilweise durch eine Kommissionierstation begrenzt. Durch die Kommissionierstation kann unter anderem ein Bereich des ersten Kommissionierraums begrenzt werden, sodass ein Lagerist nicht in den meist als Schacht ausgestalteten Kommissionierraum fallen kann. Weiterhin kann die Kommissionierstation Behälter handhaben und diese beispielsweise an weitere Intralogistikeinrichtungen, wie zum Beispiel Förderbänder, übergeben. Dadurch kann sowohl von oben als auch von unten mit der Blocklageranordnung interagiert werden, sodass eine gute Effizienz erreicht wird.

Vorzugsweise weist die Blocklageranordnung neben dem erster Kommissionierraum einen zweiten Kommissionierraum mit einer Öffnung am oberen Ende auf. So können im ersten Kommissionierraum Behälter in der vom Warenausgang vorgegebenen Sequenz zu einem Behälterstapel geformt werden. Wenn dann aus dem obersten Behälter Artikel bzw. Handelseinheiten entnommen werden, wird der oberste Behälter zu einem "leeren" Behälter. Der "leere" Behälter wird anschließend zum zweiten Kommissionierraum überführt, wobei der "leere" Behälter durch diesen zweiten Kommissionierraum wieder nach unten in die Blocklageranordnung eingebracht wird. Dadurch entsteht eine Art Kreislauf, was eine gute Effizienz mit sich bringt.

Vorzugsweise weist die Blocklageranordnung wenigstens eine Dichteinrichtung auf, die dazu konfiguriert ist, eine Innenatmosphäre des Blocklagers in Verbindung mit einem in dem ersten Kommissionierraum angeordneten ersten Behälterstapel und/oder mit einem in dem zweiten Kommissionierraum angeordneten zweiten Behälterstapel gegenüber einer Umgebungsatmosphäre abzudichten. Je nach Ausführung und Art der Blocklageranordnung, unter Berücksichtigung der in der Blocklageranordnung zu lagernder Ware, wird die Blocklageranordnung mit einer Innenatmosphäre beaufschlagt, die beispielsweise feuerhemmende Eigenschaften aufweist. Dazu weist die Blocklageranordnung eine dichte Hülle und Schleusen für Behälter auf. Dadurch wird eine Brandgefahr innerhalb des Blocklagers gering gehalten. Damit die Innenatmosphäre nicht entweicht, dichtet die wenigstens eine Dichteinrichtung zumindest zeitweise die Innenatmosphäre von der Umgebungsatmosphäre ab. Die wenigstens eine Dichteinrichtung weist beispielsweise Dichtlippen auf, die an Außenflächen eines Behälters anliegen, und somit eine Dichtung zwischen der Öffnung und dem Behälter herstellen, sodass dadurch ein Entweichen der Innenatmosphäre erreicht wird.

Vorzugsweise ist die wenigstens eine Dichteinrichtung in der Kommissionierstation angeordnet. Dadurch können die oberen ein bis fünf Behälter, vorzugsweise drei Behälter, eines Behälterstapels im Kommissionierraum zur Abdichtung genutzt werden. Entsprechend kann die Dichteinrichtung als Anordnung von mehreren an dem Behälterstapel anliegenden Dichtlippen ausgestaltet werden.

Alternativ kann jeder Behälter durch eine Abdeckung mit Dichtungen aus geeignetem Material abgedichtet werden, die auf jeden Behälter aufgesetzt wird.

Vorzugsweise sind der erste und der zweite Kommissionierraum durch wenigstens einen Behälterstapelraum voneinander beabstandet. Somit kann ein Behälter aus dem ersten Kommissionierraum entnommen werden, zwischen dem ersten und dem zweiten Kommissionierraum zwischengelagert werden, und anschließend in den zweiten Kommissionierraum überführt werden. Die Kommissionierräume und Behälterstapelräume sind an die Abmessungen eines Behälters angepasst, wodurch eine gute Raumausbeute erreicht wird. Weiterhin werden die Wege kurz gehalten, sodass hierdurch eine gute Effizienz erreicht wird.

Alternativ können die beiden Kommissionierräume benachbart angeordnet werden. In dieser Anordnung kann beispielsweise auf den obersten im ersten Kommissionierraum angeordneten Behälter zugegriffen werden, bevor der Behälter über den zweiten Kommissionierraum in das Blocklager eingebracht wird.

Vorzugsweise weist die Lageranordnung eine Authentifizierungseinrichtung auf. Durch die Authentifizierungseinrichtung kann sich ein Lagerist, Kunde oder Nutzer ausweisen, damit nur zertifizierte Personen auf den Inhalt der Lageranordnung bzw. des Blocklagers zugreifen können. Entsprechend können Behälter nur an bestimmte Personen ausgegeben. Dadurch kann die Lageranordnung beispielsweise als Bankschließfach genutzt werden, wobei die einzelnen Schließfächer zum Kunden kommen. Zur Interaktion zwischen dem Kunden und der Lageranordnung kann beispielsweise eine Kommissionierstation genutzt werden. Dadurch kann ein Tresorraum, Kellerraum oder der gleichen mit einer entsprechend großen Blocklageranordnung ausgestattet werden und die Raumausbeute lässt sich optimieren.

Weiterhin wird die obengenannte Aufgabe durch ein Verfahren der eingangs genannten Art gelöst, wobei die Behälter mit auszulagernden Waren vorzugsweise mit einer vom Warenausgang vorbestimmten Sequenz von unten in einen ersten Kommissionierraum der Blocklageranordnung eingebracht werden und wobei diese Behälter durch eine obere Öffnung aus dem ersten Kommissionierraum entnommen werden. Somit können Waren, auch Artikel oder Handelseinheiten genannt, aus dem Behälter entnommen werden. Sobald der oberste Behälter von dem Stapel entnommen wurde, kann aus dem Beschickungsraum ein weiterer Behälter mit Waren entsprechend der vom Warenausgang bestimmten Sequenz in den Kommissionierraum eingeführt werden, sodass auf den nächsten obersten Behälter zugegriffen werden kann. Dies wiederholt sich bis die Kommissionierung abgeschlossen ist. Zwischen der Entnahme einer ersten Ware aus einem ersten Behälter und einer Entnahme einer Ware aus einem zweiten Behälter verstreicht also wenig Zeit, sodass eine gute Effizienz erreicht wird.

Vorzugsweise wird von einer oberhalb der Behälterstapelräume angeordneten Arbeitsplattform durch die Öffnung auf einen obersten Behälter eines im Kommissionierraum angeordneten Behälterstapels zugegriffen. Auf der Arbeitsplattform können beispielsweise weitere Intralogistikeinrichtungen, wie Förderer, Förderbänder oder dergleichen angeordnet sein. Dadurch können die entnommenen Waren direkt kommissioniert oder weiter transportiert werden. Die Arbeitsplattform kann beispielsweise eine Decke eines Gebäudes sein, sodass der unter der Arbeitsplattform liegende Raum komplett mit der Blocklageranordnung ausgefüllt werden kann. Dadurch wird eine maximale Raumausbeute erreicht.

Vorzugsweise weist die Blocklageranordnung eine Kommissionierstation auf, die zumindest zeitweise mit einem Behälterstapel des Kommissionierraumes zusammenwirkt. So kann die Kommissionierstation beispielsweise einen obersten Behälter vom Behälterstapel abnehmen und zwischenlagern oder anderweitig handhaben. Dadurch wird ein weiterer Schritt der Handhabung der Behälter automatisiert, was effizient ist.

Vorzugsweise weist die Blocklageranordnung einen zweiten Kommissionierraum mit einer der Kommissionierstation zugewandten oberen Öffnung auf, wobei an der Kommissionierstation folgende Schritte durchgeführt werden:
a) Entnahme eines obersten Behälters eines Behälterstapels aus dem ersten Kommissionierraum,
b) Handhabung eines Behälters und/oder
c) Zuführung eines Behälters von oben in den zweiten Kommissionierraum.

Diese Schritte können in beliebiger Reihenfolge durchgeführt werden, wobei ein gleichzeitiges Durchführen mehrerer Schritte ebenfalls möglich ist. Durch den zweiten Kommissionieraum können "leere" Behälter, aus denen Ware bereits entnommen wurde, zurück in die Blocklageranordnung überführt werden. Alternativ können "leere" Behälter auch zu einer anderen Station des Blocklagers transportiert werden, um dort beispielsweise mit neuer Ware befüllt zu werden. Durch die Kombination der beiden Kommissionierräume in der Kommissionierstation werden kurze Wege erreicht, sodass eine gute Effizienz vorliegt.

Vorzugsweise wird während Schritt b) der Behälter in einer Kommissionierposition zwischengelagert. In dieser Position kann auf ein Inneres des Behälters zugegriffen werden, ohne dass ein Zugriff von außen auf den ersten oder zweiten Kommissionierraum möglich ist. Weiterhin kann in der Kommissionierposition ein Behälter in einer ergonomischen Lage angeordnet werden, sodass ein für den Logistiker angenehmes Arbeiten vorliegt. Alternativ zum Logistiker kann ein Roboter während Schritt b) auf einen Behälter bzw. auf ein Inneres des Behälters zugreifen.

Alternativ oder zusätzlich zum Logistiker kann die Kommissionierstation mit einer Fördertechnik zusammenwirken. Durch die Fördertechnik können Behälter und/oder aus einem Behälter entnommene Artikel von der Kommissionierstation abgeführt, der Kommissionierstation zugeführt und/oder in einem Puffer zwischengelagert werden. Weiterhin kann durch die Fördertechnik ein Behälter vom ersten Kommissionierraum zum zweiten Kommissionierraum überführt werden.

Vorzugsweise werden Behälter im Beschickungsraum durch ein Beschickungsfahrzeug gehandhabt, und von unten nach oben in den ersten Kommissionierraum eingebracht und von oben nach unten aus dem zweiten Kommissionierraum entnommen werden. Die Richtungsangaben "oben" und "unten" beziehen sich auf die Schwerkraftrichtung. Mit der Blocklageranordnung kann also von oben und unten interagiert werden, sodass dadurch eine gute Effizienz erreicht wird.

Vorzugsweise wird vor Entnahme eines Behälters eine Authentifizierung durchgeführt. Die Entnahme bezieht sich auf die Entnahme aus dem Kommissionierraum. Dazu kann erfindungsgemäß die Lageranordnung, insbesondere die Kommissionierstation mit einer Authentifizierungseinrichtung ausgestattet sein. Zur Authentifizierung kann beispielsweise eine ID-Karte, PIN, Passwort oder dergleichen genutzt werden. Die Authentifizierung kann optional bei der Einlagerung durchgeführt werden. Dazu kann die Authentifizierungsvorrichtung beispielsweise an der Kommissionierstation angeordnet sein. Dadurch kann das Lagersystem auch für die Lagerung von Wertobjekten, wie sie beispielsweise in einem Bankschließfach vorliegen, eingesetzt werden. Dadurch kann eine gute Sicherheit erreicht werden.

Im Folgenden wird die Erfindung anhand eines bevorzugten Ausführungsbeispiels in Verbindung mit der Zeichnung näher beschrieben. Hierhin zeigen:
- Fig. 1: eine schematische Darstellung eines Lagersystems im Querschnitt;
- Fig. 2: eine schematische perspektivische Sicht auf ein Lagersystem;
- Fig. 3: eine erste schematische Schnittdarstellung einer ersten Dichteinrichtung;
- Fig. 4: eine zweite schematische Schnittdarstellung einer ersten Dichteinrichtung;
- Fig. 5: eine schematische Darstellung einer zweiten Dichteinrichtung.

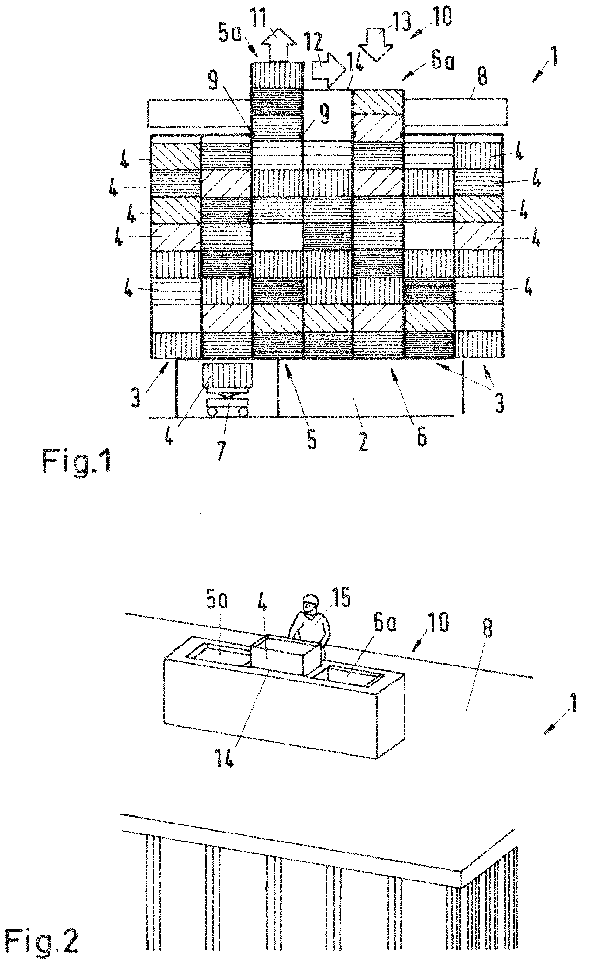

Fig. 1 zeigt eine erfindungsgemäße Lageranordnung in einer Schnittansicht. Die Lageranordnung weist eine Blocklageranordnung 1 mit einem Beschickungsraum 2 auf, der in Schwerkraftrichtung unter mehreren nebeneinander angeordneten Behälterstapelräumen 3 angeordnet ist. In den Behälterstapelräumen 3 sind Behälter 4 angeordnet, die jeweils einen Behälterstapel bilden. Weiterhin sind oberhalb des Beschickungsraumes 2 ein meist als Schacht ausgestalteter erster Kommissionierraum 5 und ein ebenfalls meist als Schacht ausgestalteter zweiter Kommissionierraum 6 vorgesehen. In jedem der Kommissionierräume 5, 6 sind jeweils Behälterstapel aus Behältern 4 angeordnet. Die Kommissionierräume 5, 6 weisen jeweils eine Öffnung 5a, 6a an ihrem oberen Ende auf, durch die ein Behälterstapel des jeweiligen Kommissionierraumes 5, 6 ragt.

In dem Beschickungsraum 2 ist ein Beschickungsfahrzeug 7 vorgesehen, das einen Behälter 4 transportiert. Das Beschickungsfahrzeug 7 kann Behälter 4 aus den Behälterstapelräumen 3 und den Kommissionierräumen 5,6 auslagern und umgekehrt einlagern. Hierzu wird der einzulagernde Behälter 4 durch das Beschickungsfahrzeug 7 so lange angehoben, bis der Behälter 4 eine nicht dargestellte Halteeinrichtung passiert hat. Beim danach folgenden Absenken greift die Halteeinrichtung den dann untersten Behälter 4 und hält diesen fest.

Zur Entnahme aus einen Behälterstapelraum 3 oder einem der beiden Kommissionierräume 5, 6 hebt das Beschickungsfahrzeug 7 den Behälterstapel so lange an, bis der unterste Behälter 4 eines Behälterstapels von der Halteeinrichtung freigekommen ist. Die Halteeinrichtung wird dann offengehalten, bis der unterste Behälter 4 an ihr vorbei abgesenkt worden ist und greift dann den nächst darüberliegenden Behälter 4, sodass der bislang vorletzte Behälter 4 dann den untersten Behälter 4 bildet.

Es kann auch sein, dass mehrere Behälter 4 aus einem Behälterstapel entnommen werden wollen. In diesem Fall muss ein Steuermechanismus vorgesehen sein, der die Halteeinrichtung solange offen hält, bis die gewünschte Anzahl von Behältern 4 aus dem jeweiligen Behälterstapelraum 3 entnommen worden ist.

Das Beschickungsfahrzeug 7 dient nicht nur dazu, die Behälter 4 in das Blocklageranordnung 1 einzubringen. Es dient auch dazu die Behälter 4 innerhalb der Blocklageranordnung 1 von einem Behälterstapelraum 3 in einen anderen Behälterstapelraum 3 umzulagern, oder auch Behälter 4 aus dem Blocklageranordnung 1 zu entnehmen, oder Behälter 4 in die Blocklageranordnung 1 einzuführen.

Die oben beschriebene Lageranordnung weist neben dem dargestellten Blocklageranordnung 1 einen nicht dargestellten Wareneingang und einen nicht dargestellten Warenausgang auf. Am Wareneingang werden Waren in die Lageranordnung eingebracht und aus einem Anlieferungsgebinde, beispielsweise einer Palette, entnommen. Auf dem Anlieferungsgebinde ist eine Vielzahl gleichartiger Waren angeordnet. Die Waren werden aus dem Anlieferungsgebinde entnommen und in einen Behälter 4 überführt. Der Behälter 4 wird mit Hilfe des Beschickungsfahrzeuges 7, das bspw. als führerloses Transportfahrzeug ausgebildet ist, in das Blocklager 1 transportiert. Dazu überführt das Beschickungsfahrzeug 7 die Behälter 4 vom Beschickungsraum aus in die Behälterstapelräume 3 bzw. in den ersten oder zweiten Kommissionierraum 5, 6. Jeder der Behälterstapelräume 3 und ersten und zweiten Kommissionierräume 5, 6 ist in der Lage, eine Mehrzahl von Behältern 4 in Form eines Behälterstapels aufzunehmen. Zum Stapeln weisen die Behälter 4 eine nicht dargestellte Stapelgeometrie auf, die mit einer Stapelgeometrie eines in Schwerkraftrichtung oberhalb und/oder unterhalb des Behälters 4 angeordneten anderen Behälters 4 zusammenwirkt. Zweckmäßigerweise sind alle Behälter 4 gleich ausgebildet.

Das Blocklageranordnung 1 weist eine Arbeitsplattform 8 auf, die oberhalb zumindest einiger Behälterstapelräume 3 angeordnet ist. Die Arbeitsplattform 8 weist Aussparungen auf, durch die die Kommissionierräume 5, 6 ragen. Die Öffnungen 5a, 6a der Kommissionierräume 5, 6 sind durch die Kommissionierstation 10 begrenzt. Im vorliegenden Ausführungsbeispiel begrenzt die Kommissionierstation 10 die Kommissionierräume 5, 6 in einer Richtung senkrecht zur Schwerkraftrichtung.

Das Blocklageranordnung 1 weist Dichteinrichtungen 9 auf, die innerhalb der Kommissionierräume 5, 6 angeordnet ist. Die Dichteinrichtungen 9 sind dazu ausgestaltet, eine im Inneren der Blocklageranordnung 1, insbesondere den Behälterstapelräumen 3 und den Kommissionierräumen 5,6, vorgesehene Innenatmosphäre gegenüber einer Umgebungsatmosphäre außerhalb der Blocklageranordnung 1 abzudichten.

Die Pfeile 11, 12, 13 zeigen Bewegungen eines Behälters 4 durch die Kommissionierstation 10. Der Behälter 4 wird entgegen der Schwerkraftrichtung durch den ersten Kommissionierraum 5 nach oben bewegt bis er zur Öffnung 5a gelangt, siehe erster Pfeil 11. In der Kommissionierstation 10 wird der Behälter 4 aus dem ersten Kommissionierraum 5 entnommen und bspw. von links nach rechts bewegt, siehe zweiter Pfeil 12. Im Bereich des zweiten Pfeils 12 wird der Behälter in einer Kommissionierposition 14 zwischengelagert. Die im Behälter 4 enthaltene Ware wird entnommen und kommisioniert. Anschließend wird der nun leere Behälter 4 in den zweiten Kommissionieraum 6 eingeführt und von dort aus von oben nach unten in die Blocklageranordnung 1 eingebracht, siehe Pfeil 13.

Das Beschickungsfahrzeug 7 lagert Behälter 4 vorzugsweise in einer vom Warenausgang vorgegebenen Sequenz in den ersten Kommissionierraum 5 ein. In der Kommissionierstation 10 wird der oberste Behälter 4 in die Kommissionierposition 14 überführt. Dort entnimmt der Lagerist 15 oder eine nicht dargestellte Handhabungseinrichtung, bspw. ein Roboter, Handelseinheiten aus dem Behälter 4 und kommissioniert diese. Von der Kommissionierposition 14 aus wird der Behälter 4 über die Öffnung 6a in den zweiten Kommissionierraum 6 eingebracht und zurück in die Blocklageranordnung 1 überführt. Das Beschickungsfahrzeug 7 bestückt also den ersten Kommissionierraum 5 mit Behältern 4 und entnimmt dem zweiten Kommissionierraum 6 die dann in der Regel leeren Behälter 4.

Bei einem weiteren Ausführungsbeispiel kann im Rahmen eines Kommissionierauftrages eine bestimmte Anzahl Behälter 4 entsprechend der vom Warenausgang vorgegebenen Sequenz in den Kommissionieraum 5, 6 eingelagert werden, wobei die Behälter 4 durch die Öffnung 5a, 6a nach oben hin entnommen und außerhalb des Blocklagers 1 zwischengelagert werden. Sobald sämtliche dem Kommissionierauftrag zugeordneten Behälter 4 aus dem Kommissionierraum 5, 6 entnommen wurden und der Kommissionierauftrag abgeschlossen ist, können die nun außerhalb des Blocklagers 1 zwischengelagerten Behälter 4 durch die Öffnung 5a, 6a und den Kommissionierraum 5, 6 wieder in das Blocklager 1 eingeführt werden. Dadurch können auch einzelne Kommissionieraufträge mit einem erfindungsgemäßen Kommissionierraum 5, 6 abgearbeitet werden. Entsprechend besteht die Möglichkeit, Kommissionieraufträge einzeln oder als mehrere zusammengeschlossene Kommissionieraufträge abzuarbeiten.

Fig. 2 zeigt eine perspektivische Sicht auf die Lageranordnung mit der Blocklageranordnung 1, auf deren Oberseite die Arbeitsplattform 8 mit der Kommissionierstation 10 angeordnet ist. Die Kommissionierstation 10 wirkt mit dem ersten Kommissionierraum 5 und dem zweiten Kommissionieraum 6 zusammen, wobei Behälter 4 durch den ersten Kommissionierraum 5 zur Kommissionierstation 10 gebracht werden und durch den zweiten Kommissionieraum 6 von der Kommissionierstation 10 entfernt werden. Zwischen den beiden Kommissionierräumen 5, 6 ist die Kommissionierposition 14 angeordnet. Hier wird der Behälter 4 zwischengelagert, sodass Waren, Artikel, Handelseinheiten oder dergleichen aus dem Behälter 4 durch einen Lagerist 15 entnommen werden können.

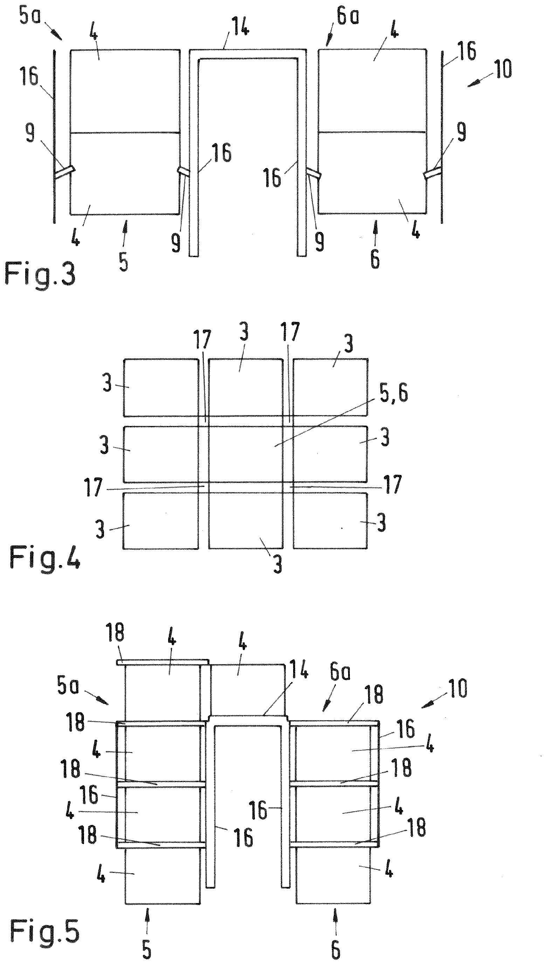

Fig. 3 zeigt eine Schnittansicht entlang der Schwerkraftrichtung der Kommissionierstation 10 mit der Dichteinrichtung 9. Die Dichteinrichtung 9 besteht bei der dargestellten Ausführungsform aus mehreren bspw. aus Gummi oder dgl. geformten Dichtlippen 9, die in dem ersten Kommissionierraum 5 und dem zweiten Kommissionierraum 6 angeordnet sind. Die Dichtlippen 9 passen sich einer Bewegungsrichtung des Behälterstapels bzw. der Behälter 4 an. So sind Dichtlippen 9 im ersten Kommissionierraum 5 nach oben geneigt, während Dichtlippen 9 im zweiten Kommissionierraum 6 nach unten geneigt sind. Weiterhin liegen die Dichtlippen 9 jeweils an einem Behälter 4 und an einer Wand 16 des Kommissionierraums 5, 6 an, um somit eine Dichtung zwischen dem Inneren der Blocklageranordnung 1 und dessen Umgebung zu erreichen.

Fig. 4 zeigt eine schematische Draufsicht auf die Dichteinrichtung 9, die zwischen vertikalen Tragelementen 17 der Blocklageranordnung 1 um den jeweiligen Kommissionierraum 5, 6 angeordnet sind. Um den jeweiligen Kommissionierraum 5, 6 sind in einem vorgesehenen Abstand weitere Behälterstapel in Behälterstapelräumen 3 angeordnet.

Fig. 5 zeigt eine weitere Ausführungsform der Dichteinrichtung 9 nach Fig. 3. Hierzu ist die Dichteinrichtung als Deckel 18 für jeweils einen Behälter 4 ausgestaltet. Die Deckel 18 wirken im Bereich der Kommissionierstation 10 mit Wänden 16 zusammen, sodass eine Dichtung erreicht wird. Um auf ein Inneres des Behälters 4 zuzugreifen, muss der Deckel 18 abgenommen werden. Bevor der Behälter 4 wieder in das Blocklageranordnung 1 eingeführt wird, wird der Deckel 18 auf den Behälter 4 aufgesetzt.

Alternativ zur Entnahme von Handelseinheiten aus dem Behälter 4 in der Kommissionierposition 14 können Handelseinheiten auch direkt aus dem im ersten Kommissionierraum 5 angeordneten obersten Behälter 4 entnommen werden. Dadurch entfällt die Überführung des Behälters 4 in die Kommissionierposition 14, und der Behälter 4 kann direkt vom ersten Kommissionierraum 5 in den zweiten Kommissionierraum 6 überführt werden. In einem solchen Fall können die Kommisionierräume 5, 6 auch direkt nebeneinander liegen, ohne dass dazwischen ein Behälterstapelraum 3 vorgesehen wird.

Weiterhin kann der oberste Behälter 4 des im ersten Kommissionierraum 5 angeordneten Behälterstapels aus dem ersten Kommissionierraum 5 entnommen werden und an einem Bedarfsort, beispielsweise einer Produktionslinie, über einen längeren Zeitraum bereitgestellt werden.

Neben der oben beschriebenen Möglichkeit, einen "leerer" Behälter 4 von der Kommissionierstation 10 aus wieder in die Blocklageranordnung 1 einzuführen, besteht weiterhin die Möglichkeit, den "leeren" Behälter 4 einer anderen Verwendung zuzuführen. So kann beispielsweise der "leere" Behälter 4 zu einem späteren Zeitpunkt in die Lageranordnung eingelagert oder zur Vereinzelung der Anlieferungsgebinde bereitgestellt werden.

So kann die Lageranordnung beispielsweise unterhalb einer Produktionsline angeordnet sein, wobei jeder Arbeitsplatz bzw. Bedarfsplatz eine eigene Kommissionierstation 10 mit entsprechenden ersten und zweiten Kommissionierräumen 5,6 aufweist. Somit kann die Lageranordnung benötigte Waren direkt an dem Bedarfsplatz bereitstellen. Hierzu können die Behälter 4 auch aus der Kommissionierstation 10 entnommen und außerhalb der Kommissionierstation 10 zwischengelagert werden. Sobald der Behälter 4 leer ist, kann dieser wieder über die Kommissionierstation 10 in die Blocklageranordnung 1 eingeführt werden.

Die Arbeitsplattform 8 kann beispielsweise als Decke bzw. Boden eines Gebäudes ausgestaltet sein. Somit kann beispielsweise in einem Kellerraum die Lageranordnung angeordnet sein, wobei im Erdgeschoss die Kommissionierstation 10 vorgesehen ist. Entsprechend kann die Lageranordnung, insbesondere die Blocklageranordnung 1, den Kellerraum zur Gänze ausfüllen. Weiterhin kann die Kommissionierstation 10 im Erdgeschoss beispielsweise barrierefrei zugänglich sein.

Die Lageranordnung kann weiterhin eine Authentifizierungsmöglichkeit aufweisen, sodass sich ein Benutzer authentifizieren muss, bevor Behälter 4 zur Kommissionierstation 10 überführt werden. Die Authentifizierungsmöglichkeit kann beispielsweise eine Identifikationsmöglichkeit, wie Ausweiskontrolle, Passwortabfrage, Pin-Abfrage, eine Schlüssel-Schloss-Verbindung oder dergleichen aufweisen. Dies erlaubt beispielsweise den Einsatz der Lageranordnung in Verbindung mit Bankschließfächern. Die Bankschließfächer können beispielsweise in jeweils einem Behälter 4 angeordnet sein oder hierdurch gebildet werden. Dazu ist die Blocklageranordnung 1 innerhalb eines Tresorraumes vorgesehen, wodurch der im Tresorraum vorliegende Raum gut ausgenutzt wird.

Behälter 4 für eine Bankschließfachapplikation können durch weitere Sicherheitsmaßnahmen, wie beispielsweise Deckel mit abschließbarem Schloss ausgestattet sein. Alternativ oder zusätzlich dazu kann in einem Behälter 4 eine gesicherte Wertgegenstandkassette angeordnet sein. Dies führt zu einer guten Sicherheit.

Neben der oben beschriebenen Lageranordnung mit zwei Kommissionierräumen 5,6 kann die Lageranordnung weitere, nicht dargestellte Kommissionierräume 5,6 also mindestens zwei Kommissionierräume 5,6 aufweisen. Die nicht dargestellten Kommissionierräume 5,6 können beispielsweise ebenfalls in einer Kommissionierstation 10 angeordnet sein. Zum Beispiel können drei Kommissionierräume 5,6 mit einer Kommissionierstation 10 zusammenwirken, wobei zwei Kommissionierräume 5,6 Behälter 4 zur Kommissionierstation 10 zuführen, währen durch den dritten Kommissionierraum 5,6 Behälter 4 in die Blocklageranordnung 1 eingebracht werden.

## Patentansprüche

1. Lageranordnung mit einem Wareneingang, einem Warenausgang und einer Blocklageranordnung (1), wobei die Blocklageranordnung (1) mehrere Behälterstapelräume (3) und einen in Schwerkraftrichtung unterhalb der Behälterstapelräume (3) angeordneten Beschickungsraum (2) aufweist, **dadurch gekennzeichnet, dass** die Blocklageranordnung (1) einen oberhalb des Beschickungsraums (2) angeordneten ersten Kommissionierraum (5) aufweist, der dazu ausgestaltet ist einen Behälterstapel aufzunehmen, wobei der erste Kommissionierraum (5) eine obere Öffnung (5a) zur Entnahme eines Behälters (4) aufweist.

2. Lageranordnung nach Anspruch 1, wobei oberhalb des Behälterstapelräume (3) eine Arbeitsplattform (8) angeordnet ist und wobei sich der erste Kommissionierraum (5) durch die Arbeitsplattform (8) erstreckt.

3. Lageranordnung nach Anspruch 1 oder 2, wobei die Öffnung (5a) des ersten Kommissionierraums (5) zumindest teilweise von einer Kommissionierstation (10) begrenzt ist.

4. Lageranordnung nach einem der Ansprüche 1 bis 3, wobei die Blocklageranordnung (1) einen zweiten Kommissionierraum (6) aufweist, wobei der zweite Kommissionierraum (6) eine obere Öffnung (6a) zur Zufuhr eines Behälters (4) aufweist.

5. Lageranordnung nach einem der vorherigen Ansprüche , wobei die Blocklageranordnung (1) wenigstens eine Dichteinrichtung (9) aufweist, die dazu konfiguriert ist, eine Innenatmosphäre der Blocklageranordnung (1) in Verbindung mit einem in dem ersten Kommissionierraum (5) angeordneten ersten Behälterstapel und/oder mit einem in dem zweiten Kommissionierraum (6) angeordneten zweiten Behälterstapel gegenüber einer Umgebungsatmosphäre abzudichten.

6. Lageranordnung nach Anspruch 5, wobei die wenigstens eine Dichteinrichtung (9) in der Kommissionierstation (10) angeordnet ist.

7. Lageranordnung nach Anspruch 5 oder 6, wobei die wenigstens eine Dichteinrichtung (9) als Lippendichtung ausgebildet ist.

8. Lageranordnung nach einem der Ansprüche 4 bis 7, wobei der erste und der zweite Kommissionierraum (5, 6) durch wenigstens einen Behälterstapelraum (3) voneinander beabstandet sind.

9. Verfahren zum Betreiben einer Lageranordnung, bei dem Waren in einem stapelbaren Behälter (4) in einem Behälterstapelraum (3) einer Blocklageranordnung (1) zwischenlagert werden, wobei die Blocklageranordnung (1) mehrere Behälterstapelräume (3) aufweist und jeder Behälterstapelraum (3) zur Aufnahme eines Stapels von Behältern (4) ausgebildet ist, wobei die Behälterstapelräume (3) von unten durch einen Beschickungsraum (2) mit den Behältern (4) beschickt werden und wobei Behälter (4) mit auszulagernden Waren aus dem Behälterstapelraum (3) entnommen werden, **dadurch gekennzeichnet, dass** die Behälter (4) mit auszulagernden Waren vorzugsweise mit einer vom Warenausgang vorbestimmten Sequenz von unten in einen ersten Kommissionierraum (5) der Blocklageranordnung (1) eingebracht werden und dass diese Behälter (4) durch eine obere Öffnung (5a) aus dem ersten Kommissionierraum (5) entnommen werden.

10. Verfahren nach Anspruch 9, wobei auf einer oberhalb der Behälterstapelräume (3) angeordneten Arbeitsplattform (8) eine Kommissionierstation (10) vorgesehen ist und wobei der oberste Behälter (4) eines im ersten Kommissionierraum (5) angeordneten Behälterstapels durch die Öffnung (5a) des ersten Kommissionierraums (5) der Kommissionierstation (10) zugeführt wird.

11. Verfahren nach Anspruch 10, wobei die Blocklageranordnung (1) einen zweiten Kommissionierraum (6) mit einer der Kommissionierstation (10) zugewandten oberen Öffnung (6a) aufweist und wobei an der Kommissionierstation (10) folgende Schritte durchführt werden:
a) Entnahme eines obersten Behälters (4) eines Behälterstapels aus dem ersten Kommissionierraum (5),
b) Handhabung eines Behälters (4) und/oder
c) Zuführung eines Behälters (4) von oben in den zweiten Kommissionierraum (6).

12. Verfahren nach Anspruch 11, wobei während Schritt b) der Behälter (4) in einer Kommissionierposition (14) zwischengelagert wird.

13. Verfahren nach Anspruch 11 oder 12, wobei Behälter (4) im Beschickungsraum (2) durch ein Beschickungsfahrzeug (7) gehandhabt werden, von unten nach oben in den ersten Kommissionierraum (5) eingebracht und von oben nach unten aus dem zweiten Kommissionierraum (6) entnommen werden.

14. Verfahren nach einem der Ansprüche 9 bis 13, wobei vor Entnahme eines Behälters (4) aus dem Kommissionierraum (5) eine Authentifizierung eines Nutzers (15) durchgeführt wird.
